(19) **Europäisches Patentamt**

**European Patent Office**

**Office européen des brevets**

(11) **EP 1 391 435 B1**

(12) **FASCICULE DE BREVET EUROPEEN**

(45) Date de publication et mention
de la délivrance du brevet:
**17.05.2006 Bulletin 2006/20**

(51) Int Cl.:
**C03B 37/012** (2006.01)     **G02B 6/02** (2006.01)

(21) Numéro de dépôt: **03291987.0**

(22) Date de dépôt: **08.08.2003**

(54) **Préforme pour une fibre optique à microstructures et procédé de sa fabrication**

Vorform für eine Microstrukturierte optische Faser und Verfahren zu ihrer Herstellung

Microstructured optical fibre preform and process of its manufacture

(84) Etats contractants désignés:
**AT BE BG CH CY CZ DE DK EE ES FI FR GB GR HU IE IT LI LU MC NL PT RO SE SI SK TR**

(30) Priorité: **22.08.2002 FR 0210474**

(43) Date de publication de la demande:
**25.02.2004 Bulletin 2004/09**

(73) Titulaire: **ALCATEL**
**75008 Paris (FR)**

(72) Inventeurs:
• **Gasca, Laurent**
**91140 Villebon Sur Yvette (FR)**
• **Melin, Gilles**
**91400 Orsay (FR)**
• **Rejeaunier, Xavier**
**91310 Linas (FR)**
• **Lempereur, Simon**
**94800 Villejuif (FR)**
• **Moreau, Christine**
**91120 Palaiseau (FR)**
• **Fleureau, Anne**
**77880 Grez Sur Loing (FR)**

(74) Mandataire: **Lamoureux, Bernard et al**
**COMPAGNIE FINANCIERE ALCATEL**
**Département Propriété Industrielle**
**54, rue La Boétie**
**75008 Paris (FR)**

(56) Documents cités:
**EP-A- 0 810 453          EP-A- 1 234 806**
**WO-A-00/60388**

**Description**

La présente invention concerne un procédé de fabrication d'une fibre optique à trous longitudinaux.

Classiquement, une fibre à trous est constituée d'un matériau massique diélectrique, tel que de la silice, incluant une distribution de motifs, dits « trous », régulièrement espacés. Les trous sont généralement de l'air mais peuvent être composés d'un autre matériau diélectrique, distinct de la silice et d'indice de réfraction différent, préférentiellement inférieur. Dans une fibre, les trous présentent la forme de tubes s'étendant longitudinalement le long de la fibre dans la direction de la propagation du signal. Une telle structure de fibre a été décrite dans la publication « All silica single mode optical fiber with photonic crystal cladding » de J.C. Knight et al, Optical Letters, Vol. 21, No 19, PP 1547-1549, 1/10/1996.

Dans une fibre à trous, deux mécanismes de guidage de la lumière sont mis en oeuvre. D'une part un guidage par réflexion totale interne, lié au fait que la zone comportant les trous présente un indice plus faible que celui de la silice, et d'autre part un guidage par bande photonique interdite lorsque les trous sont disposés selon une structure périodique et que cette périodicité est rompue au niveau du coeur de la fibre.

La disposition régulière des trous dans la silice permet d'assimiler une telle structure à un cristal, baptisé cristal photonique, dont les caractéristiques sont déterminées entre autre par l'espacement entre les trous, c'est à dire le pas, et le taux de remplissage des trous dans le matériau massique (connu comme « air filing » en terminologie anglaise), c'est à dire dépend du diamètre desdits trous.

Les fibres optiques à trous présentent des propriétés intéressantes en termes de dispersion chromatique, de maintien de polarisation, de surface effective, ce qui les rend attractives aussi bien en tant que fibres composants qu'en tant que fibres de ligne.

La fabrication des fibres à trous est basée sur une technique déjà connue de fabrication de fibre optique dite « microstructurée ».

En particulier, le brevet européen EP 0 810 453 B1 décrit une méthode de fabrication d'une telle fibre. Un barreau de silice formant noyau est entouré de tubes capillaires, le tout formant une botte est disposée dans une préforme. La fibre est alors étirée à partir d'une extrémité chauffée de la préforme, les tubes capillaires étant scellés à l'autre extrémité.

Le document EP 1 325 893 A1, une demande de brevet européen telle que définie à l'article 54(3) CBE, décrit un autre procédé de fabrication selon lequel les deux extrémités des capillaires sont scellées après les avoir remplis d'un gaz inerte vis à vis de la génération de groupes hydroxyles.

La géométrie de la fibre à trous dépendra de l'assemblage des tubes capillaires autours du barreau central qui forme la partie guidante de la fibre. La fabrication préliminaire des tubes capillaires est donc primordiale car elle détermine le diamètre des trous de la fibre, c'est à dire influe directement sur le taux de remplissage tel que défini précédemment et donc sur les propriétés de guidage de la fibre obtenue.

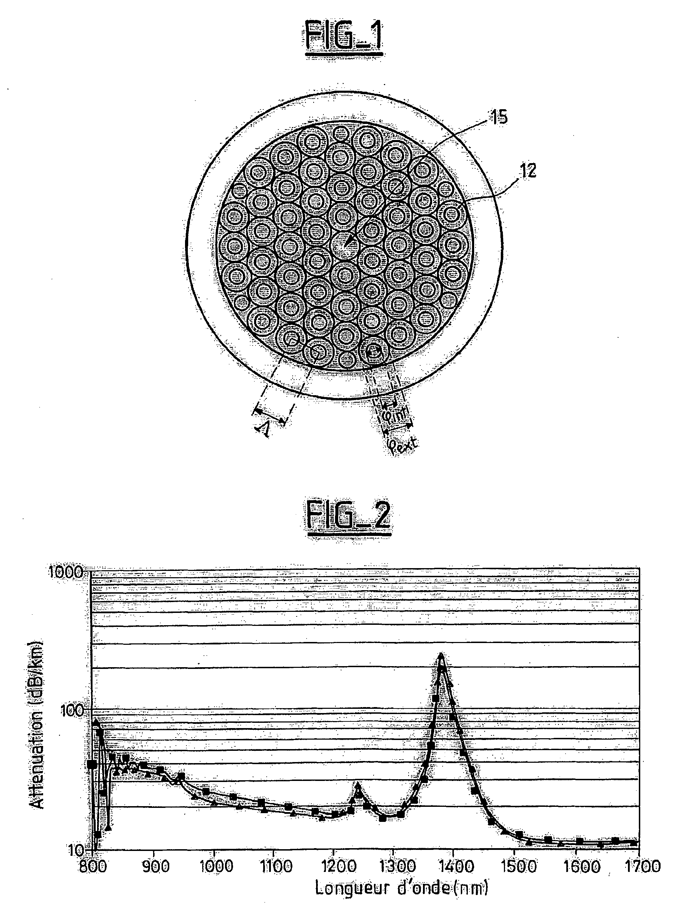

La figure 1 est une vue schématique en coupe d'une préforme d'étirage pour la réalisation d'une fibre optique à microstructures.

Les tubes capillaires 12 sont généralement obtenus par rétreint et étirage d'un tube, par exemple en silice ou silicate, présentant un diamètre intérieur $\Phi$int et un diamètre extérieur $\Phi$ext ayant un rapport $\Phi$int/$\Phi$ext bien déterminé. Par exemple, le rétreint des tubes capillaires peut être réalisé sur un tour verrier avec un chalumeau ou un four, et l'étirage se déroule classiquement sur une tour de fibrage. Le rétreint et l'étirage peuvent également être conduits simultanément sur une tour de fibrage.

Les tubes capillaires ainsi obtenus sont alors assemblés en botte autour du barreau central 15 dans la préforme d'étirage. Les conditions d'étirage, telles que la température et la vitesse, peuvent permettre de modifier le rapport $\Phi$int/$\Phi$ext et fixer le pas final A entre les trous.

Selon les applications, le barreau central 15 peut être en silice pure ou dopée, par exemple avec des dopants tels que Ge, P, Al, La, Ga, Nb, Li ou des dopants de terres rares tels que Er, Yb, Ce, Tm, Nd.

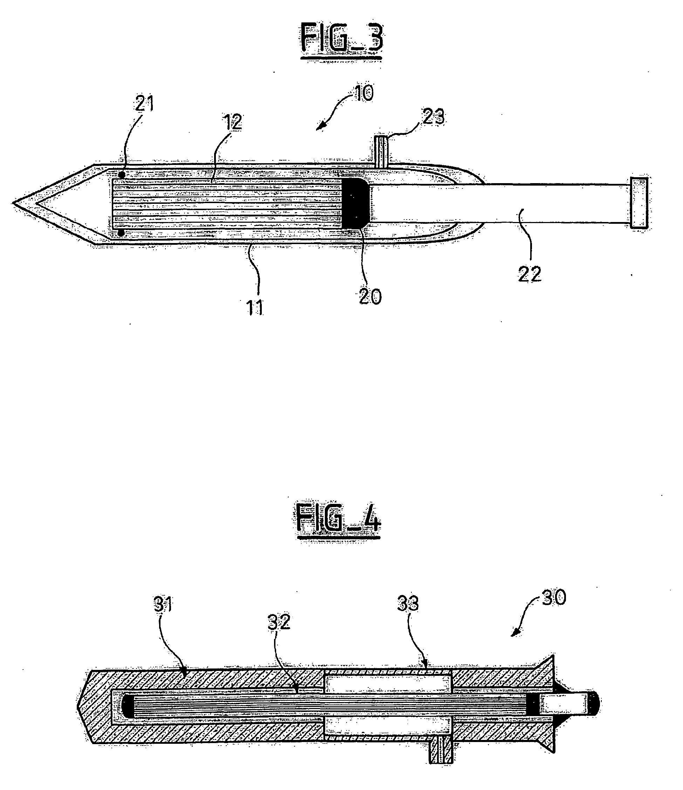

Le graphe de la figure 2 illustre l'atténuation dans une fibre à trous obtenue par un procédé tel que décrit précédemment. L'atténuation spectrale, AS($\lambda$) exprimée en dB par kilomètre, est déduite de l'expression suivante :

$$AS(\lambda) = 10 \log \left[ \left[ P_L(\lambda) - P_l(\lambda) \right] / (l-L) \right]$$

Avec : $P_L$, la puissance mesurée au bout d'une « grande longueur » L de fibre,

$P_l$, la puissance mesurée au bout d'une « petite longueur » l de fibre, correspondant à une extrémité du tronçon L.

On constate l'apparition de pics d'atténuation importants à 950nm, 1250nm et 1390nm qui sont directement liés à la présence de groupements hydroxyles (OH). En effet, lors du procédé de fabrication, des groupements hydroxyles se forment et sont absorbés aux interfaces des capillaires, entraînant une pollution de la fibre.

Cette pollution est bien connue des fabricants de fibres, mais elle est, pour les fibres conventionnelles, maîtrisée et limitée à un faible niveau, en particulier grâce au fait que l'interface air-silice est éloignée de la zone dans laquelle se propage le signal. Au contraire, dans les fibres à trous, les interfaces air-silice sont multipliées au contact du signal de propagation, ce qui provoque ces pics d'absorption importants dans la gamme des longueurs d'onde de travail.

L'objectif de la présente invention est de réduire la contribution des pics liés à la présence de groupements hydroxyles dans une fibre à trous.

A cet effet, l'invention propose de réaliser une couche auto-nettoyante à l'intérieur des capillaires, cette couche étant apte à réagir avec les groupements hydroxyles pour les évacuer sous forme de composés volatiles.

Plus particulièrement, la présente invention se rapporte à un procédé de fabrication d'une fibre optique à microstructures, comprenant les étapes suivantes :

- réalisation d'une pluralité de tubes capillaires par rétreint et étirage de tubes ;
- assemblage des tubes capillaires autour d'un barreau central pour former une botte disposée dans une préforme ;
- étirage de la botte pour former la fibre ;

caractérisé en ce que le procédé comprend une étape de réalisation d'une couche auto-nettoyante à l'intérieur des tubes capillaires, ladite couche comprenant des molécules aptes à réagir avec des molécules d'hydroxyles (OH) pour produire des composés gazeux volatiles.

Selon un premier mode de réalisation, la couche auto-nettoyante est réalisée sur la surface intérieure des tubes capillaires, postérieurement à la fabrication desdits tubes, par exemple par une technique de dépôt chimique en phase vapeur (MCVD, Modified Chemical Vapor Déposition ; PCVD, Plasma Chemical Vapor Déposition ; SPCVD, Surface Plasma wave Chemical Vapor Deposition) ou par une technique de type sol-gel.

Selon un deuxième mode de réalisation, la couche auto-nettoyante est réalisée, lors de la fabrication des tubes capillaires, par des techniques de vaporisation et densification connues sous les terminologie anglaise de OVD pour Outside Vapor Deposition ou VAD pour Vapor Axial Deposition ou par une technique de type sol-gel.

Selon une caractéristique, la couche auto-nettoyante est réalisée à partir de précurseurs gazeux comportant au moins des atomes de Chlore (Cl) et/ou de Fluor (F).

L'invention concerne également une préforme de fibre optique à microstructures, comprenant une pluralité de tubes capillaires disposés autours d'un barreau central, caractérisé en ce que les tubes capillaires comportent une couche auto-nettoyante comprenant des molécules aptes à réagir avec des molécules d'hydroxyles (OH) pour produire des composés gazeux volatiles.

Selon une caractéristique de la préforme de fibre optique de l'invention, la couche auto-nettoyante comporte au moins des atomes de Chlore (Cl) et/ou de Fluor (F).

Selon les modes de réalisation, la couche auto-nettoyante est disposée sur la surface intérieure des tubes capillaires ou est incorporée dans le matériau des tubes capillaires.

Les particularités et avantages de la présente invention apparaîtront plus clairement à la lecture de la description qui suit, donnée à titre d'exemple illustratif et non limitatif, et faite en référence aux figures annexées dans lesquelles :

- la figure 1, déjà décrite, est un schéma en coupe d'une préforme de fibre à trous ;
- la figure 2, déjà décrite, est un graphe représentant l'atténuation d'une fibre à trous en fonction de longueur d'onde ;
- les figures 3 et 4 illustrent des préformes d'étirage pour fibre à trous.

Le procédé selon l'invention consiste à fabriquer une fibre optique à microstructures qui présente une atténuation réduite due à l'adsorption du signal optique par les molécules OH absorbées par la silice lors de la fabrication de la fibre.

Le procédé comprend une étape de réalisation d'une pluralité de tubes capillaires selon une méthode classique, préalablement décrite, de rétreint et d'étirage de tubes, par exemple en silice pure ou dopée, présentant un diamètre intérieur $\Phi_{int}$ et un diamètre extérieur $\Phi_{ext}$ ayant un rapport $\Phi_{int}/\Phi_{ext}$ fixé.

Selon l'invention une couche auto-nettoyante est déposée à l'intérieure des tubes capillaires, ladite couche comprenant des molécules aptes à réagir avec les groupements hydroxyles (OH) pour produire des composés gazeux pouvant être éliminés, tel que par exemple des molécules $H_2O$, HCl ou HF. La présence de cette couche auto-nettoyante va permettre d'évacuer les groupements d'hydroxyles générés lors du procédé de fabrication de la fibre à trous. En outre, cette couche auto-nettoyante peut avantageusement réagir avec des composés métalliques polluants, par exemple ferreux, afin de produire des composés gazeux volatiles à évacuer.

La couche auto-nettoyante comporte des éléments susceptibles de réagir avec les groupements hydroxyles, tels que des molécules de Fluor (F) et/ou de Chlore (Cl). Cette couche auto-nettoyante peut présenter une épaisseur comprise entre $50\mu m$ et 3mm.

Selon un premier mode de réalisation, la couche auto-nettoyante peut être déposée sur la surface intérieure des tubes capillaires, par exemple par des techniques classiques de dépôt chimique en phase vapeur, connues sous les sigles anglo-saxons de MCVD pour Modified Chemical Vapor Deposition, PCVD pour Plasma Chemical Vapor Deposition ou SPCVD pour Surface Plasma wave Chemical Vapor Deposition. Le dépôt de la couche auto-nettoyante est alors effectué après la fabrication des tubes capillaires, avant leur assemblage dans la botte.

La couche auto-nettoyante peut également être déposée par une technique classique de type sol-gel, consistant à remplir les tubes d'une solution de précurseurs de type alkoxyde et à vider cette solution afin de laisser un dépôt de film mince sur les parois intérieures des tubes.

Selon un deuxième mode de réalisation, la couche auto-nettoyante peut être incorporée dans la silice des tubes capillaires, directement lors de la fabrication desdits tubes capillaires, par exemple par des techniques classiques de dépôt en phase vapeur et de densification du dépôt, connues sous les sigles anglo-saxons de OVD pour Outside Vapor Deposition, ou VAD pour Vapor Axial Deposition, ou également par une technique de type sol-gel en créant un dépôt poreux densifié lors de la fabrication des tubes.

La couche auto-nettoyante est obtenue selon l'une des techniques précédemment décrites à partir de précurseurs gazeux comportant aux moins du Fluor (F) et/ou du Chlore (Cl), tels que les composés ($SiF_4$) et/ou ($C_2F_6$) par exemple.

Les tubes capillaires comprenant une couche auto-nettoyante sont alors assemblés autour d'un barreau central pour former une botte disposée dans une préforme pour l'étirage de la fibre selon des techniques classiques.

La figure 3 illustre une préforme 10 classique pour l'étirage et/ou le fibrage de fibres à trous. Les tubes capillaires sont disposés dans un manchon 11 et soudés à une extrémité par une soudure massive 20 qui obture les trous. A l'autre extrémité, les tubes 12 restent ouverts et sont solidarisés avec une soudure par point sur une couronne extérieure 21. Une queue de fibrage 22 est montée à l'extrémité fermée des tubes 12. Après l'assemblage, le manchon 11 est dégazé sous vide à une température de 1000°C.

La préforme 10 est alors étirée selon des techniques classiques (tracteur d'étirage sur tour de fibrage) ou directement fibrée. Pour cela, la préforme est maintenue à pression ambiante lors de la formation de la goutte qui permet de fermer les capillaires à l'extrémité basse de la préforme et d'isoler l'intérieur des capillaires de la chambre à vide. L'étirage est fait sous vide par l'intermédiaire de la tétine de pompage 23, ce qui permet de rétreindre les interstices entre les capillaires ainsi que les cavités entre le manchon 11 et les tubes extérieurs du montage. La figure 4 illustre une préforme 30 pouvant être avantageusement utilisée pour le fibrage de fibres à trous double gaine, les trous étant situés dans une gaine interne. La principale difficulté de ce type de fibre est de bien centrer la gaine comportant les trous par rapport à la gaine externe.

Généralement, une telle fibre à trous double gaine est réalisée en deux étapes, la première étape consistant à réaliser le coeur et la gaine interne, contenant les trous, selon la technique précédemment décrite pour former une baguette 32, et la seconde étape consistant à déposer cette baguette 32 dans une nouvelle préforme 30 pour le fibrage de la gaine externe.

Avantageusement, la préforme 30 comporte alors une chambre à vide 33. La longueur du manchon 31 délimite la zone de la préforme apte à être fibrée. La baguette 32 est plus longue que le manchon 31, ce qui permet, lors du fibrage, aux composés gazeux volatiles formés par la réaction de la couche auto-nettoyante avec les groupements hydroxyles ou les composés métalliques polluants de migrer vers la partie supérieure de la préforme qui est maintenue à température ambiante.

La baguette 32 est fermée aux deux extrémités afin de maintenir une surpression interne dans les trous de la gaine interne déjà étirée lors du fibrage. Puis le fibrage de la gaine externe est réalisé sous vide, ce qui permet de bien plaquer la gaine externe contre la gaine interne et de centrer parfaitement le coeur de la fibre.

## Revendications

1. Procédé de fabrication d'une fibre optique à microstructures, comprenant les étapes suivantes :

   - réalisation d'une pluralité de tubes capillaires (12) par rétreint et étirage de tubes ;
   - assemblage des tubes capillaires (12) autour d'un barreau central (15) pour former une botte disposée dans une préforme ;
   - étirage de la botte pour former la fibre ;

   **caractérisé en ce que** le procédé comprend une étape de réalisation d'une couche auto-nettoyante à l'intérieur des tubes capillaires (12), ladite couche comprenant des molécules aptes à réagir avec des molécules d'hydroxyles (OH) pour produire des composés gazeux volatiles.

2. Procédé selon la revendication 1, **caractérisé en ce que** la couche auto-nettoyante est réalisée sur la surface intérieure des tubes capillaires (12), postérieurement à la fabrication desdits tubes.

3. Procédé selon la revendication 2, **caractérisé en ce que** le dépôt de la couche auto-nettoyante est réalisé par une technique de dépôt chimique en phase vapeur (MCVD, Modified Chemical Vapor Deposition ; PCVD, Plasma Chemical Vapor Déposition ; SPCVD, Surface Plasma wave Chemical Vapor Deposition).

4. Procédé selon la revendication 1, **caractérisé en ce que** la couche auto-nettoyante est réalisée lors de la fabrication des tubes capillaires (12).

5. Procédé selon la revendication 4, **caractérisé en ce que** la couche auto-nettoyante est réalisée par une technique de vaporisation et densification (OVD, Outside Vapor Déposition ; VAD, Vapor Axial Déposition).

6. Procédé selon l'une des revendications 2 ou 4, **ca-**

**ractérisé en ce que** la couche auto-nettoyante est réalisée par une technique de type sol-gel.

7. Procédé selon l'une quelconque des revendications précédentes, **caractérisé en ce que** la couche auto-nettoyante est réalisée à partir de précurseurs gazeux comportant au moins des atomes de Chlore (Cl) et/ou de Fluor (F).

8. Préforme d'étirage pour la réalisation d'une fibre optique à microstructures, comprenant une pluralité de tubes capillaires (12) disposés autours d'un barreau central (15), **caractérisé en ce que** les tubes capillaires (12) comportent une couche auto-nettoyante comprenant des molécules aptes à réagir avec des molécules d'hydroxyles (OH) pour produire des composés gazeux volatiles.

9. Préforme selon la revendication 8, **caractérisé en ce que** la couche auto-nettoyante comporte au moins des atomes de Chlore (Cl) et/ou de Fluor (F).

10. Préforme selon l'une des revendications 8 à 9, **caractérisé en ce que** la couche auto-nettoyante est disposée sur la surface intérieure des tubes capillaires (12).

11. Préforme selon l'une des revendications 8 à 9, **caractérisé en ce que** la couche auto-nettoyante est incorporée dans le matériau des tubes capillaires (12).

12. Préforme selon l'une des revendications 8 à 11, **caractérisé en ce que** la couche auto-nettoyante présente une épaisseur comprise entre 50 $\mu$m et 3 mm.

13. Préforme selon l'une des revendications 8 à 12, **caractérisé en ce que** le barreau central (15) est en silice pure ou dopée.

14. Préforme selon l'une des revendications 8 à 13, **caractérisé en ce que** les tubes capillaires (12) sont en silice pure ou dopée.

**Claims**

1. Method of fabricating an optical fibre with microstructures, which method includes the following steps:

   - producing a plurality of capillary tubes (12) by shrinking and drawing tubes;
   - assembling capillary tubes (12) around a central rod (15) to form a bundle disposed in a preform;
   - drawing the bundle to form the fibre;
   - **characterised in that** the method includes a step of producing inside the capillary tubes (12) a self-cleaning layer including molecules able to react with hydroxyl molecules (OH) to produce volatile gaseous substances.

2. Method according to claim 1, **characterised in that** the self-cleaning layer is produced on the interior surface of the capillary tubes (12) after the fabrication of said tubes.

3. Method according to claim 2, **characterised in that** the self-cleaning layer is deposited by a vapour phase chemical deposition technique such as Modified Chemical Vapour Deposition (MCVD), Plasma Chemical Vapour Deposition (PCVD), or Surface Plasma wave Chemical Vapour Deposition (SPCVD).

4. Method according to claim 1, **characterised in that** the self-cleaning layer is produced during the fabrication of the capillary tubes (12).

5. Method according to claim 4, **characterised in that** the self-cleaning layer is produced by a vaporisation and densification technique such as Outside Vapour Deposition (OVD) or Vapour Axial Deposition (VAD).

6. Method according to claim 2 or claim 4, **characterised in that** the self-cleaning layer is produced by a sol-gel technique.

7. Method according to any preceding claim, **characterised in that** the self-cleaning layer is produced from gaseous precursors including at least atoms of chlorine (Cl) and/or fluorine (F).

8. Drawing preform for producing an optical fibre with microstructures comprising a plurality of capillary tubes (12) disposed around a central rod (15), **characterised in that** the capillary tubes (12) include a self-cleaning layer including molecules able to react with hydroxyl molecules (OH) to produce volatile gaseous substances.

9. Preform claimed in claim 8, **characterised in that** the self-cleaning layer includes at least atoms of chlorine (Cl) and/or fluorine (F).

10. Preform claimed in claim 8 or claim 9, **characterised in that** the self-cleaning layer is disposed on the interior surface of the capillary tubes (12).

11. Preform claimed in claim 8 or claim 9, **characterised in that** the self-cleaning layer is incorporated into the material of the capillary tubes (12).

12. Preform claimed in any of claims 8 to 11, **characterised in that** the self-cleaning layer is from 50 $\mu$m to 3 mm thick.

**13.** Preform claimed in any of claims 8 to 12, **characterised in that** the central rod (15) is made of pure or doped silica.

**14.** Preform claimed in any of claims 8 to 13, **characterised in that** the capillary tubes (12) are made of pure or doped silica.

## Patentansprüche

**1.** Verfahren zur Fertigung einer optischen Faser mit Mikrostrukturen, welches die folgenden Schritte beinhaltet:

   - Herstellung einer Vielzahl von Kapillarrohren (12) durch Reduzieren und Ziehen von Rohren;
   - Zusammenfügen der Kapillarrohre (12) um einen Mittelstab (15) herum zwecks Bildung eines in einer Vorform angeordneten Bündels;
   - Ziehen des Bündels zwecks Bildung der Faser;

   **dadurch gekennzeichnet, dass** das Verfahren einen Schritt Herstellung einer selbst reinigenden Schicht im Inneren der Kapillarrohre (12) beinhaltet, wobei diese Schicht Moleküle enthält, die fähig sind, mit Hydroxylmolekülen (OH) zu reagieren, um flüchtige gasförmige Verbindungen zu erzeugen.

**2.** Verfahren gemäß Anspruch 1, **dadurch gekennzeichnet, dass** die selbst reinigende Schicht auf der Innenseite der Kapillarrohre (12) hergestellt wird, und zwar nach der Fertigung dieser Rohre.

**3.** Verfahren gemäß Anspruch 2, **dadurch gekennzeichnet, dass** die Abscheidung der selbst reinigenden Schicht durch eine Gasphasenabscheidungstechnik (MCVD, Modified Chemical Vapor Deposition ; PCVD, Plasma Chemical Vapor Deposition ; SPCVD, Surface Plasma wave Chemical Vapor Deposition) erfolgt.

**4.** Verfahren gemäß Anspruch 1, **dadurch gekennzeichnet, dass** die selbst reinigende Schicht bei der Fertigung der Kapilallarrohre (12) hergestellt wird.

**5.** Verfahren gemäß Anspruch 4, **dadurch gekennzeichnet, dass** die selbst reinigende Schicht durch eine Verdampfungs- und Verdichtungstechnik (OVD, Outside Vapor Deposition ; VAD, Vapor Axial Deposition) hergestellt wird.

**6.** Verfahren nach einem der Ansprüche 2 oder 4, **dadurch gekennzeichnet, dass** die selbst reinigende Schicht durch eine Technik des Typs Sol-Gel hergestellt wird.

**7.** Verfahren gemäß einem beliebigen vorstehenden Anspruch, **dadurch gekennzeichnet, dass** die selbst reinigende Schicht ausgehend von gasförmigen Vorläufern hergestellt wird, die mindestens Chlor- (CI) und/oder Fluor- (F)-Atome enthalten.

**8.** Zieh-Vorform für die Herstellung einer optischen Faser mit Mikrostrukturen, die eine Vielzahl von Kapillarrohren (12) enthält, die um einen Mittelstab (15) herum angeordnet sind, **dadurch gekennzeichnet, dass** die Kapillarrohre (12) eine selbst reinigende Schicht beinhalten, welche Moleküle enthält, die fähig sind, mit Hydroxylmolekülen (OH) zu reagieren, um flüchtige gasförmige Verbindungen zu erzeugen.

**9.** Vorform gemäß Anspruch 8, **dadurch gekennzeichnet, dass** die selbst reinigende Schicht mindestens Chlor- (CI) und/oder Fluor- (F) Atome enthält.

**10.** Vorform gemäß Anspruch 8 oder 9, **dadurch gekennzeichnet, dass** die selbst reinigende Schicht auf der Innenseite der Kapillarrohre (12) angeordnet ist.

**11.** Vorform gemäß Anspruch 8 oder 9, **dadurch gekennzeichnet, dass** die selbst reinigende Schicht in den Werkstoff der Kapillarrohre (12) eingearbeitet ist.

**12.** Vorform gemäß einem der Ansprüche 8 bis 11, **dadurch gekennzeichnet, dass** die selbst reinigende Schicht eine Dicke zwischen 50 $\mu$m und 3 mm aufweist.

**13.** Vorform gemäß einem der Ansprüche 8 bis 12, **dadurch gekennzeichnet, dass** der Mittelstab (15) aus reinem oder gedoptem Siliciumdioxid besteht.

**14.** Vorform gemäß einem der Ansprüche 8 bis 13, **dadurch gekennzeichnet, dass** die Kapillarrohre (12) aus reinem oder gedoptem Siliciumdioxid sind.

FIG_1

FIG_2

## FIG_3

## FIG_4